## Europäisches Patentamt

## European Patent Office

## Office européen des brevets

(11) Veröffentlichungsnummer: **0 155 455**
**B1**

(12) **EUROPÄISCHE PATENTSCHRIFT**

(45) Veröffentlichungstag der Patentschrift:
**22.06.88**

(51) Int. Cl.⁴: **H 04 L 25/49, H 03 M 5/02**

(21) Anmeldenummer: **85100614.8**

(22) Anmeldetag: **22.01.85**

(54) **Schaltungsanordnung zum Codieren eines digitalen Eingangssignales.**

(30) Priorität: **25.02.84 DE 3406945**

(43) Veröffentlichungstag der Anmeldung:
**25.09.85 Patentblatt 85/39**

(45) Bekanntmachung des Hinweises auf die Patenterteilung:
**22.06.88 Patentblatt 88/25**

(84) Benannte Vertragsstaaten:
**DE FR GB IT**

(56) Entgegenhaltungen:
**EP - A - 0 064 097**
**US - A - 3 405 235**
**US - A - 3 631 471**

(73) Patentinhaber: **ANT Nachrichtentechnik GmbH,
Gerberstrasse 33, D-7150 Backnang (DE)**

(72) Erfinder: **Bredemeier-Klonki, Volker, Dipl.-Ing.,
Königsberger Strasse 36, D-7155 Oppenweiler (DE)**
Erfinder: **Annecke, Karl-Heinz, Dr. Ing.,
Nansenstrasse 25/2, D-7150 Backnang (DE)**

**Beschreibung**

Die Erfindung betrifft eine Schaltungsanordnung zum Codieren eines digitalen Eingangssignals gemäss Oberbegriff des Patentanspruchs 1.

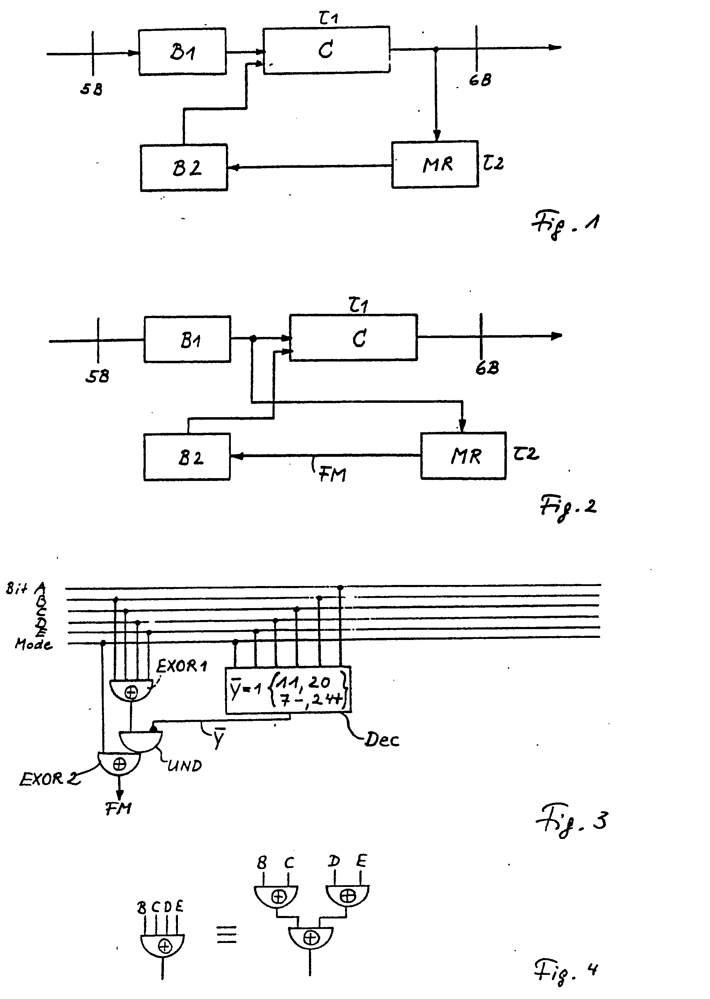

Verfahren sind bekannt, beispielsweise durch die Europäische Patentanmeldung EP-A-0064097, welche die Umsetzung von binären Signalen für Lichtwellenleitübertragungssysteme beschreibt, wobei digitale Eingangssignale aus einem ersten Binärcode mit 32 unterschiedlichen Codeworten mit jeweils fünf Binärziffern entsprechend 32 möglichen Amplitudenwerten in Ausgangssignale umgesetzt werden, welche in einem zweiten Binärcode mit Codeworten aus sechs Binärziffern mit einem positiven und einem negativen Mode, wobei sich der Mode entsprechend der laufenden digitalen Summe am Ende des vorhergehenden Codewortes mit sechs Binärziffern ergibt, auftreten. Eine solche Vorgehensweise ist in Fig. 1 dargestellt. Das eingehende fünf-Bit-codierte Signal 5B wird nach Zwischenspeicherung in einem ersten Zwischenspeicher B1 mittels eines Codierers C in sechs-Bit-codierte Wörter 6B umgesetzt. Aus letzteren leitet sich der Modeauswahlrechner MR den Modus für das folgende Codewort her, welcher in einem zweiten Zwischenspeicher B2 zwischengespeichert und dem Codierer C zugeführt wird. Nachteilig ist hierbei die dynamische Eigenschaft, welche für höhere Datenübertragungsraten als beispielsweise 500 Mbit/s nicht mehr ausreichend ist. Die schlechte dynamische Eigenschaft wird dadurch hervorgerufen, dass beim Signallaufweg ein kritischer Pfad auftritt, bei dem die für die dynamische Eigenschaft veranrtwortlichen Laufzeiten $\tau 1$ und $\tau 2$ im Codierer C bzw. im Modeauswahlrechner MR summarisch auftreten.

Der vorliegenden Erfindung lag deshalb die Aufgabe zugrunde, eine Schaltungsanordnung der eingangs genannten Art anzugeben, bei der eine wesentliche Verbesserung der dynamischen Eigenschaften erreicht wird und wobei der zusätzliche Aufwand nur geringfügig sein soll.

Die Lösung erfolgt mit den gekennzeichneten Merkmalen des Patentanspruchs 1. Optimale Ausgestaltungen der Erfindung ergeben sich durch die Unteransprüche.

Der Vorteil der vorliegenden Schaltungsanordnung ist darin zu sehen, dass durch Parallelisierung zeitkritischer Pfade die wirksame Gesamtlaufzeit reduziert werden kann. Wenn man davon ausgeht, dass die Laufzeiten für Codierer und Modeauswahlrechner etwa gleich gross sind, so sinkt die Gesamtlaufzeit um die Hälfte. Das bedeutet, dass ein Einsatz etwa bei der doppelten bisher möglichen Bitrate ermöglicht wird. Ein weiterer Vorteil liegt in dem relativ geringen Schaltungsaufwand.

Aus der US-A-3631471 ist eine Schaltungsanordnung bekannt geworden, durch die eine Sequenz von n Bits in eine Sequenz von m Bits umcodiert wird, unter anderem mit n=5 und m=6, aber mit einer anderen Codetabelle als derjenigen gemäss vorliegender Schaltungsanordnung. Hierbei wird eine relativ aufwendige Schaltung verwendet, die mittels des durch n geteilten Empfangstaktes gesteuert wird und ein Verzögerungsglied enthält, so dass eine Funktion bei unterschiedlichen Taktraten nicht oder nur eingeschränkt möglich erscheint und die maximal mögliche Taktrate aufgrund der Verzögerungszeit einen relativ niedrigen Wert aufweist.

Die erfindungsgemässe Anordnung weist ein solches Verzögerungsglied nicht auf und arbeitet taktunabhängig. Es folgt nun die Beschreibung der Erfindung anhand der Figuren.

Fig. 2 zeigt als Blockschaltbild die erfindungsgemässe Schaltungsanordnung;

Fig. 3 stellt eine Ausführungsform für einen Modeauswahlrechner dar, und in

Fig. 4 ist eine Schaltungseinzelheit in äquivalenter Form dargestellt.

Die Fig. 2 zeigt im wesentlichen dieselbe Anordnung wie Fig. 1, der Unterschied besteht jedoch darin, dass der Eingang des Modeauswahlrechners MR nicht mit dem Ausgang des 5B/6B-Codierers C, sondern mit dem Ausgang des Zwischenspeichers B1 für das Eingangssignal, welches 5-Bit-codiert ist, verbunden ist. Auf diese Weise kann die Auswertung des 5-Bit-Codewortes des Eingangssignals durch den Codierer und durch den Modeauswahlrechner gleichzeitig beginnen. Unter der Annahme, dass beide Durchlaufzeiten etwa gleich lang sind, sind Codierung und Modeauswahl damit schon nach einer Zeit $\tau 1$ ungefähr gleich $\tau 2$ beendet, so dass die nächste Codierung und Modeauswahl begonnen werden können, während bei der Anordnung nach Fig. 1 die Modeauswahl erst nach Beendigung der Codierung von 5 Bit in ein 6 Bit-Wort erfolgen kann.

In Fig. 3 ist eine Ausführungsform für den erfindungsgemässen Modeauswahlrechner MR dargestellt. Er besteht aus einer ersten ausschliessenden ODER-Schaltung EXOR 1, deren vier Eingänge von den Bits B, C, D, E des 5-Bit-codierten Dateneingangssignals gespeist werden. Der Ausgang dieses EXOR-Gliedes führt auf den einen Eingang eines UND-Gliedes UND, dessen Ausgang mit dem einen Eingang eines zweiten ausschliessenden ODER-Gliedes EXOR 2 verbunden ist und dessen Eingang über eine Invertierungsstufe von dem Ausgang eines Decodier-Gliedes Dec gespeist wird. Das Decodierglied Dec wird eingangsseitig von allen 5 Bits des Dateneingangssignals und von einem Binärsignalmode beaufschlagt, welcher eines der beiden Binärsignale 0 oder 1 annimmt, je nach dem, ob der augenblickliche Modus ein positiver oder ein negativer ist. Die Decodierschaltung Dec erzeugt an ihrem Ausgang Y eine binäre 1, wenn am Eingang das 5-Bit-Codewort 11 oder 20, das 5-Bit-Codewort 7 bei negativem oder 24 bei positivem augenblicklichen Modus vorliegen. Da der zweite Eingang des zweiten ausschliessenden ODER-Gliedes EXOR 2 von dem Binärsignal für den augenblicklichen Modus Mode beaufschlagt ist, erscheint am Ausgang FM dieses Gliedes das Binärsignal für den Folgemodus, wobei im Falle einer ungeraden Anzahl von Einsen in den letzten vier Bits des 5-Bit-codierten Eingangssignals, also in B, C, D und E der Modus für das folgende Codewort invertiert wird. Im Fall einer geraden Anzahl von binären Einsen in den genannten vier letzten Bitstellen sowie für die Sonderfälle, wenn das Eingangssignal die Codeworte 11, 20 oder 7 bei negativem augenblicklichen oder 24 bei positivem augenblicklichen Modus aufweist, wird der augenblickliche Modus auch für das folgende 5-Bit-Codewort beibehalten. Auf diese Weise wird eine Codierung gemäss der Tabelle 1, siehe Seite 9, erzielt.

In Fig. 4 ist die Äquivalenz einer ausschliessenden ODER-Schaltung mit vier Eingängen und dreier ausschliessender ODER-Schaltungen mit jeweils zwei Eingängen, in Baumstruktur, dargestellt.

Die Decodierschaltung Dec nach Fig. 3 ist in üblicher Weise mittels logischer Verknüpfungsglieder nach den bekannten Regeln der logischen Verknüpfung realisierbar.

## Tabelle 1

| 5B-Wort | | 6B-Wort Mode + | | Folge-Mode | Mode − | | Folge-Mode |
|---|---|---|---|---|---|---|---|
| 0 | 00000 | 50 | 110010 | + | 50 | 110010 | − |
| 1 | 00001 | 51 | 110011 | − | 33 | 100001 | + |
| 2 | 00010 | 54 | 110110 | − | 34 | 100010 | + |
| 3 | 00011 | 35 | 100011 | + | 35 | 100011 | − |
| 4 | 00100 | 53 | 110101 | − | 36 | 100100 | + |
| 5 | 00101 | 37 | 100101 | + | 37 | 100101 | − |
| 6 | 00110 | 38 | 100110 | + | 38 | 100110 | − |
| 7 | 00111 | 39 | 100111 | − | 7 | 000111 | − |
| 8 | 01000 | 43 | 101011 | − | 40 | 101000 | + |
| 9 | 01001 | 41 | 101001 | + | 41 | 101001 | − |
| 10 | 01010 | 42 | 101010 | + | 42 | 101010 | − |
| 11 | 01011 | 11 | 001011 | + | 11 | 001011 | − |
| 12 | 01100 | 44 | 101100 | + | 44 | 101100 | − |
| 13 | 01101 | 45 | 101101 | − | 5 | 000101 | + |
| 14 | 01110 | 46 | 101110 | − | 6 | 000110 | + |
| 15 | 01111 | 14 | 001110 | + | 14 | 001110 | − |
| 16 | 10000 | 49 | 110001 | + | 49 | 110001 | − |
| 17 | 10001 | 57 | 111001 | − | 17 | 010001 | + |
| 18 | 10010 | 58 | 111010 | − | 18 | 010010 | + |
| 19 | 10011 | 19 | 010011 | + | 19 | 010011 | − |
| 20 | 10100 | 52 | 110100 | + | 52 | 110100 | − |
| 21 | 10101 | 21 | 010101 | + | 21 | 010101 | − |
| 22 | 10110 | 22 | 010110 | + | 22 | 010110 | − |
| 23 | 10111 | 23 | 010111 | − | 20 | 010100 | + |
| 24 | 11000 | 56 | 111000 | + | 24 | 011000 | + |
| 25 | 11001 | 25 | 011001 | + | 25 | 011001 | − |
| 26 | 11010 | 26 | 011010 | + | 26 | 011010 | − |
| 27 | 11011 | 27 | 011011 | − | 10 | 001010 | + |
| 28 | 11100 | 28 | 011100 | + | 28 | 011100 | − |
| 29 | 11101 | 29 | 011101 | − | 9 | 001001 | + |
| 30 | 11110 | 30 | 011110 | − | 12 | 001100 | + |
| 31 | 11111 | 13 | 001101 | + | 13 | 001101 | − |
| | ABCDE | | ABCDEF | | | ABCDEF | |

## Patentansprüche

1. Schaltungsanordnung zum Codieren eines digitalen Eingangssignals, dessen nach einem ersten Binärcode codierten Fünf-Bit-Codewörter nach einem zweiten Binärcode mit einem positiven und einem negativen Modus in Sechs-Bit-Codewörter umgesetzt werden, wobei während der Auswertung (C) des laufenden entsprechend der Vorgabe des augenblicklich vorliegenden Modus zu codierenden Fünf-Bit-Codewortes des Eingangssignales der Modus für das folgende zu codierende Fünf-Bit-Codewort (Folgemodus, FM) des Eingangssignals in einem Modeauswahlrechner (MR) bestimmt wird und wobei die Umsetzung nach folgender Tabelle erfolgt:

| 5B-Wort | | 6B-Wort Mode + | | Folge-Mode | Mode − | | Folge-Mode |
|---|---|---|---|---|---|---|---|
| 0 | 00000 | 50 | 110010 | + | 50 | 110010 | − |
| 1 | 00001 | 51 | 110011 | − | 33 | 100001 | + |
| 2 | 00010 | 54 | 110110 | − | 34 | 100010 | + |
| 3 | 00011 | 35 | 100011 | + | 35 | 100011 | − |
| 4 | 00100 | 53 | 110101 | − | 36 | 100100 | + |
| 5 | 00101 | 37 | 100101 | + | 37 | 100101 | − |
| 6 | 00110 | 38 | 100110 | + | 38 | 100110 | − |
| 7 | 00111 | 39 | 100111 | − | 7 | 000111 | − |
| 8 | 01000 | 43 | 101011 | − | 40 | 101000 | + |
| 9 | 01001 | 41 | 101001 | + | 41 | 101001 | − |
| 10 | 01010 | 42 | 101010 | + | 42 | 101010 | − |
| 11 | 01011 | 11 | 001011 | + | 11 | 001011 | − |
| 12 | 01100 | 44 | 101100 | + | 44 | 101100 | − |
| 13 | 01101 | 45 | 101101 | − | 5 | 000101 | + |
| 14 | 01110 | 46 | 101110 | − | 6 | 000110 | + |
| 15 | 01111 | 14 | 001110 | + | 14 | 001110 | − |
| 16 | 10000 | 49 | 110001 | + | 49 | 110001 | − |
| 17 | 10001 | 57 | 111001 | − | 17 | 010001 | + |
| 18 | 10010 | 58 | 111010 | − | 18 | 010010 | + |
| 19 | 10011 | 19 | 010011 | + | 19 | 010011 | − |
| 20 | 10100 | 52 | 110100 | + | 52 | 110100 | − |
| 21 | 10101 | 21 | 010101 | + | 21 | 010101 | − |
| 22 | 10110 | 22 | 010110 | + | 22 | 010110 | − |
| 23 | 10111 | 23 | 010111 | − | 20 | 010100 | + |
| 24 | 11000 | 56 | 111000 | + | 24 | 011000 | + |
| 25 | 11001 | 25 | 011001 | + | 25 | 011001 | − |
| 26 | 11010 | 26 | 011010 | + | 26 | 011010 | − |
| 27 | 11011 | 27 | 011011 | − | 10 | 001010 | + |
| 28 | 11100 | 28 | 011100 | + | 28 | 011100 | − |
| 29 | 11101 | 29 | 011101 | − | 9 | 001001 | + |
| 30 | 11110 | 30 | 011110 | − | 12 | 001100 | + |
| 31 | 11111 | 13 | 001101 | + | 13 | 001101 | − |
| | ABCDE | | ABCDEF | | | ABCDEF | |

wobei zur Bestimmung des Folgemodus (FM) die letzten vier Bitstellen (B, C, D, E) des Fünf-Bit-Codewortes im Modeauswahlrechner (MR) untersucht werden, wobei bei einer ungeraden Anzahl von binären Einsen in diesen Bitstellen der Folgemodus durch Invertierung des augenblicklichen Modus (Mode) erzeugt wird und bei einer geraden Anzahl von binären Einsen in diesen Bitstellen (B, C, D, E), bei den Codeworten 11 und 20, bei dem Codewort 7 mit dem augenblicklichen negativen und bei dem Codewort 24 mit dem augenblicklichen positiven Modus der augenblickliche Modus als Folgemodus (FM) beibehalten wird, wobei der Modeauswahlrechner (MR) dadurch gekennzeichnet ist, dass ein ausschliessendes ODER-Glied (EXOR 1) vorgesehen ist, dessen vier Eingänge mit den vier letzten Bit (B, C, D, E) des Fünf-Bit-Codewortes beaufschlagt sind und dessen Ausgang auf den einen Eingang eines UND-Gliedes (UND) geführt ist,
dass ein zweites ausschliessendes ODER-Glied (EXOR 2) vorgesehen ist, dessen einer Eingang mit dem Ausgang des UND-Gliedes verbunden ist und dessen anderer Eingang mit dem augenblicklichen Modus (Mode) beaufschlagt ist, der eines der beiden Binärsignale «0» oder «1» entsprechend positivem oder negativem augenblicklichem Modus (Mode) annimmt,
dass eine Decodierschaltung (Dec) vorgesehen ist, deren Eingänge mit den Bits (A, B, C, D, E) des Fünf-Bit-Codewortes und mit dem augenblicklichen Modus (Mode) beaufschlagt sind und dessen Ausgang (Y) bei den Codeworten 11 und 20, bei dem Codewort 7 mit dem augenblicklichen negativen und bei dem Codewort 24 mit dem augenblicklichen positiven Modus eine binäre Null erzeugt und mit dem anderen Eingang des UND-Gliedes (UND) verbunden ist,
und dass am Ausgang des zweiten ausschliessenden ODER-Gliedes (EXOR 2) das Binärsignal des Folgemodus (FM) abgreifbar ist.

2. Schaltungsanordnung nach Anspruch 1, dadurch gekennzeichnet, dass das erste ausschliessende ODER-Gied (EXOR 1) mit vier Eingängen durch drei EXOR-Gatter mit je zwei Eingängen in Baumstruktur realisiert ist.

3. Schaltungsanordnung nach Anspruch 1 oder 2, gekennzeichnet durch den Einsatz in einem integrierten 5B/6B-Coder.

## Claims

1. Circuit arrangement for the coding of a digital input signal, the five-bit code words of which — being coded according to a first binary code — are translated into six-bit code words according to a second binary code with a positive and a negative mode, wherein the mode for the next five-bit code word to be coded (next mode, FM) of the input signal is determined in a mode selection computer (MR) during the evaluation (C) of the current five-bit code word, to be coded according to the import of the instantaneously present mode, of the input signal and wherein the translation takes place according to the following table:

| five-bit word | | six-bit word mode + | | next mode | mode − | | next mode |
|---|---|---|---|---|---|---|---|
| 0 | 00000 | 50 | 110010 | + | 50 | 110010 | − |
| 1 | 00001 | 51 | 110011 | − | 33 | 100001 | + |
| 2 | 00010 | 54 | 110110 | − | 34 | 100010 | + |
| 3 | 00011 | 35 | 100011 | + | 35 | 100011 | − |
| 4 | 00100 | 53 | 110101 | − | 36 | 100100 | + |
| 5 | 00101 | 37 | 100101 | + | 37 | 100101 | − |
| 6 | 00110 | 38 | 100110 | + | 38 | 100110 | − |
| 7 | 00111 | 39 | 100111 | − | 7 | 000111 | − |
| 8 | 01000 | 43 | 101011 | − | 40 | 101000 | + |
| 9 | 01001 | 41 | 101001 | + | 41 | 101001 | − |
| 10 | 01010 | 42 | 101010 | + | 42 | 101010 | − |
| 11 | 01011 | 11 | 001011 | + | 11 | 001011 | − |
| 12 | 01100 | 44 | 101100 | + | 44 | 101100 | − |
| 13 | 01101 | 45 | 101101 | − | 5 | 000101 | + |
| 14 | 01110 | 46 | 101110 | − | 6 | 000110 | + |
| 15 | 01111 | 14 | 001110 | + | 14 | 001110 | − |
| 16 | 10000 | 49 | 110001 | + | 49 | 110001 | − |
| 17 | 10001 | 57 | 111001 | − | 17 | 010001 | + |
| 18 | 10010 | 58 | 111010 | − | 18 | 010010 | + |
| 19 | 10011 | 19 | 010011 | + | 19 | 010011 | − |
| 20 | 10100 | 52 | 110100 | + | 52 | 110100 | − |
| 21 | 10101 | 21 | 010101 | + | 21 | 010101 | − |
| 22 | 10110 | 22 | 010110 | + | 22 | 010110 | − |
| 23 | 10111 | 23 | 010111 | − | 20 | 010100 | + |
| 24 | 11000 | 56 | 111000 | + | 24 | 011000 | + |
| 25 | 11001 | 25 | 011001 | + | 25 | 011001 | − |
| 26 | 11010 | 26 | 011010 | + | 26 | 011010 | − |
| 27 | 11011 | 27 | 011011 | − | 10 | 001010 | + |
| 28 | 11100 | 28 | 011100 | + | 28 | 011100 | − |
| 29 | 11101 | 29 | 011101 | − | 9 | 001001 | + |
| 30 | 11110 | 30 | 011110 | − | 12 | 001100 | + |
| 31 | 11111 | 13 | 001101 | + | 13 | 001101 | − |
| | ABCDE | | ABCDEF | | | ABCDEF | |

wherein the last four bit places (B, C, D, E) of the five-bit code word are examined in the mode selection computer (MR) for the determination of the next mode (FM), wherein the next mode is produced through inversion of the instantaneous mode in the case of an odd number of binary ones in these bit places and the instantaneous mode is retained as next mode (FM) for the code words 11 and 20, for the code word 7 with the instantaneous negative mode and for the code word 24 with the instantaneous positive mode in the case of an even number of binary ones in these bit places (B, C, D, E), wherein the mode selection computer (MR) is characterized thereby, that an exclusive OR-member (EXOR 1) is provided, the four inputs of which are acted on by the last four bits (B, C, D, E) of the five-bit code word and the output of which is conducted to the one input of an AND-member (UND), that a second exclusive OR-member (EXOR 2) is provided, the one input of which is connected with the output of the AND-member and the other input of which is acted on by the instantaneous mode and assumes one of both the binary signals «0» or «1» according to positive or negative instantaneous mode, that a decoding circuit (Dec) is provided, the inputs of which are acted on by the bits (A, B, C, D, E) of the five-bit code word and by the instantaneous mode.

and the output (Y) of which produces a binary zero for the code words 11 and 20, for the code word 7 with the instantaneous negative mode and for the code word 24 with the instantaneous positive mode and is connected with the other input of the AND-member, and that the binary signal of the next mode (FM) is derivable at the output of the second exclusive OR-member (EXOR 2).

2. Circuit arrangement according to claim 1, characterized thereby, that the first exclusive OR-member (EXOR 1) with four inputs is realised in tree structure by three EXOR gates eachwith two inputs.

3. Circuit arrangement according to claim 1 or 2, characterized by the use in an integrated five-bit/six-bit coder.

**Revendications**

1. Dispositif pour le codage d'un signal d'entrée numérique dont les mots de code à cinq bits, codés selon un premier code binaire, sont transcodés en mots de code à six bits, selon un second code binaire à mode positif et mode négatif, avec lequel, pendant le traitement (C) du mot de code à cinq bits – du signal d'entrée – en cours de traitement et qui est à coder conformément au mode instantané indiqué, est déterminé le mode pour le mot de code à cinq bits qui est à coder ensuite (mode suivant, FM) du signal d'entrée, dans un calculateur-sélecteur de mode (MR), et avec lequel le transcodage s'opère suivant la table suivante:

| Mot 5B | | Mot 6B Mode + | | Mode suivant | Mode − | | Mode suivant |
|---|---|---|---|---|---|---|---|
| 0 | 00000 | 50 | 110010 | + | 50 | 110010 | − |
| 1 | 00001 | 51 | 110011 | − | 33 | 100001 | + |
| 2 | 00010 | 54 | 110110 | − | 34 | 100010 | + |
| 3 | 00011 | 35 | 100011 | + | 35 | 100011 | − |
| 4 | 00100 | 53 | 110101 | − | 36 | 100100 | + |
| 5 | 00101 | 37 | 100101 | + | 37 | 100101 | − |
| 6 | 00110 | 38 | 100110 | + | 38 | 100110 | − |
| 7 | 00111 | 39 | 100111 | − | 7 | 000111 | − |
| 8 | 01000 | 43 | 101011 | − | 40 | 101000 | + |
| 9 | 01001 | 41 | 101001 | + | 41 | 101001 | − |
| 10 | 01010 | 42 | 101010 | + | 42 | 101010 | − |
| 11 | 01011 | 11 | 001011 | + | 11 | 001011 | − |
| 12 | 01100 | 44 | 101100 | + | 44 | 101100 | − |
| 13 | 01101 | 45 | 101101 | − | 5 | 000101 | + |
| 14 | 01110 | 46 | 101110 | − | 6 | 000110 | + |
| 15 | 01111 | 14 | 001110 | + | 14 | 001110 | − |
| 16 | 10000 | 49 | 110001 | + | 49 | 110001 | − |
| 17 | 10001 | 57 | 111001 | − | 17 | 010001 | + |
| 18 | 10010 | 58 | 111010 | − | 18 | 010010 | + |
| 19 | 10011 | 19 | 010011 | + | 19 | 010011 | − |
| 20 | 10100 | 52 | 110100 | + | 52 | 110100 | − |
| 21 | 10101 | 21 | 010101 | + | 21 | 010101 | − |
| 22 | 10110 | 22 | 010110 | + | 22 | 010110 | − |
| 23 | 10111 | 23 | 010111 | − | 20 | 010100 | + |
| 24 | 11000 | 56 | 111000 | + | 24 | 011000 | + |
| 25 | 11001 | 25 | 011001 | + | 25 | 011001 | − |
| 26 | 11010 | 26 | 011010 | + | 26 | 011010 | − |
| 27 | 11011 | 27 | 011011 | − | 10 | 001010 | + |
| 28 | 11100 | 28 | 011100 | + | 28 | 011100 | − |
| 29 | 11101 | 29 | 011101 | − | 9 | 001001 | + |
| 30 | 11110 | 30 | 011110 | − | 12 | 001100 | + |
| 31 | 11111 | 13 | 001101 | + | 13 | 001101 | − |
| | ABCDE | | ABCDEF | | | ABCDEF | |

avec examen dans le calculateur-sélecteur de mode (MR) des quatre dernières positions binaires (B, C, D, E) du mot de code à cinq bits pour la détermination du mode suivant (FM), le mode suivant étant produit par inversion du mode instantané lorsqu'il y a un nombre impair de «un» binaires dans ces positions binaires et le mode instantané étant conservé pour le mode suivant (FM) lorsqu'il y a un nombre pair de «un» binaires dans ces positions binaires (B, C, D, E) pour les mots de code 11 et 20, au cas où le mot de code 7 se présente alors que le mode instantané est négatif et au cas où le mot de code 24 se présente alors que le mode instantané est positif, et dans lequel le calculateur-sélecteur de mode (MR) est caractérisé en ce qu'il comprend un élément OU exclusif (EXOR 1) dont les quatre entrées sont alimentées avec les quatre derniers bits (B, C, D, E) du mot de code à cinq bits et dont la sortie est reliée à l'une des entrées d'un élément ET (ET), un second élément OU exclusif (EXOR 2) dont une entrée est reliée à la sortie de l'élément ET et dont l'autre entrée reçoit le mode instantané, représenté par l'un des deux signaux «0» ou «1», suivant que le mode instantané est positif ou négatif, ainsi qu'un circuit de décodage (Déc) dont les entrées reçoivent les bits (A, B, C, D, E) du mot de code à cinq bits et le mode instantané et dont la sortie (Y) produit un «zéro» binaire pour le mots de code 11 et 20, au cas où le mot de code 7 se présente alors que le mode instantané est négatif et au cas où le mot de code 24 se présente alors que le mode instantané est positif, la sortie (Y) étant reliée à l'autre entrée de l'élément ET (ET), et que le signal binaire du mode suivant (FM) peut être prélevé sur la sortie du second élément OU exclusif (EXOR 2).

2. Dispositif selon la revendication 1, caractérisé en ce que le premier élément OU exclusif (EXOR 1) est réalisé avec quatre entrées par l'utilisation de trois éléments OU exclusif, présentant chacun deux entrées, dans une structure ramifiée.

3. Dispositif selon la revendication 1 ou 2, caractérisé par son utilisation dans un codeur intégré 5B/6B.

0155455

Fig. 1

Fig. 2

Fig. 3

Fig. 4

9